# EUROPEAN PATENT APPLICATION

(11) **EP 2 079 018 A2**
(43) Date of publication of application: **15.07.2009**
(21) Application number: 08170931.3
(22) Date of filing: 08.12.2008
(51) Int. Cl.: G06F 9/445

(54) **Information processing apparatus, image processing apparatus, information processing method, and firmware upload method**

(30) Priority: 10.12.2007 JP 2007318813
(71) Applicant: CANON KABUSHIKI KAISHA, Ohta-ku Tokyo (JP)
(72) Inventor: Nishikawa, Satoshi, Tokyo Tokyo 146-8501 (JP)
(74) Representative: TBK-Patent

(57) **Abstract**

An information processing apparatus receives firmware information on firmware and an image processing apparatus which uploads the above-mentioned firmware, controls a display device to display a screen, including options of attribute information on an upload of the above-mentioned firmware, on the basis of the above-mentioned firmware information according to a display request, and generates a command according to the attribute information selected in the above-mentioned screen.

## Description

### BACKGROUND OF THE INVENTION

### Field of the Invention

The present invention relates to an information processing apparatus, an image processing apparatus, an information processing method, and a firmware upload method.

### Description of the Related Art

Heretofore, when it became necessary to update firmware of an image forming apparatus because of a version upgrade or a failure, a service person visited a customer and updated the firmware manually. For that reason, cost for an update of firmware became high.

Japanese Patent Application Laid-Open No. 2004-165734 discloses a technique of obtaining firmware automatically, for example, from the external when a trouble resulting from firmware is detected, stopping an operation of only a portion in which an update of the firmware is performed, and updating the firmware.

In addition, Japanese Patent Application Laid-Open No. 2001-067228 discloses a technique of a host PC having some or all of printer firmware, and downloading automatically only a necessary module to a printer side every printing processing.

### SUMMARY OF THE INVENTION

In order to solve the above-described problem, the present invention provides an information processing apparatus which has a firmware information reception unit configured to receive firmware information on firmware and an image processing apparatus which uploads the above-mentioned firmware, a display control unit configured to control a display device to display a screen, including options of attribute information on an upload of the above-mentioned firmware on the basis of the above-mentioned firmware information according to a display request, and a command generation unit configured to generate a command according to attribute information selected in the above-mentioned screen.

Further features of the present invention will become apparent from the following description of exemplary embodiments with reference to the attached drawings.

### BRIEF DESCRIPTION OF THE DRAWINGS

FIG. 1 is a diagram illustrating an example of a system configuration of a management system.

FIG. 2 is a diagram illustrating an example of a hardware configuration of a monitoring center host 111.

FIG. 3 is a diagram illustrating an example of hardware configurations of monitoring apparatuses 117, 122 and 123.

FIG. 4 is a diagram illustrating another example of hardware configurations of the monitoring apparatuses 117, 122 and 123.

FIG. 5 is a diagram illustrating an example of hardware configurations of image forming apparatuses 115, 116, 120, 121, 124, 125, 126, 127 and 131.

FIG. 6 is a diagram illustrating an example of software configurations, which relate to this embodiment, in the monitoring center host 111 and a distributing server 133.

FIG. 7 is a diagram illustrating an example of software configurations, which relate to this embodiment, in the monitoring apparatuses 117, 122 and 123.

FIG. 8 is a diagram illustrating an example of software configurations, which relate to this embodiment, in each of image forming apparatuses 115, 116, 120, 121, 124, 125, 126, 127 and 131.

FIG. 9 is a drawing illustrating an example of memory map structure in the monitoring center host 111, distributing server 133, or the monitoring apparatuses 117, 122 and 123, or the image forming apparatuses 115, 116, 120, 121, 124, 125, 126, 127 and 131.

FIG. 10 is a diagram illustrating an example of general firmware distribution processing in the distributing server 133 and monitoring center host 111, and the like besides the image forming apparatus 124 in FIG. 1.

FIG. 11 is a flowchart illustrating an example of processing from UI display (SQ1003) to download instruction (SQ1004) in the monitoring center host 111.

FIG. 12 is a drawing illustrating an example of an UI (screen) displayed at S1101.

FIG. 13 is a diagram illustrating an example of a software configuration of an image forming apparatus.

FIG. 14 is a flowchart (No. 1) illustrating an example of firmware application processing (update processing) in the image forming apparatus.

FIG. 15 is a drawing (No. 1) illustrating an example of guidance.

FIG. 16 is a drawing (No. 2) illustrating an example of guidance.

FIG. 17 is a flowchart (No. 2) illustrating an example of firmware application processing (update processing) in the image forming apparatus.

FIG. 18 is a drawing (No. 3) illustrating an example of guidance.

### DESCRIPTION OF THE EMBODIMENTS

Hereafter, embodiments of the present invention will be described on the basis of drawings.

<First embodiment>

(System configuration)

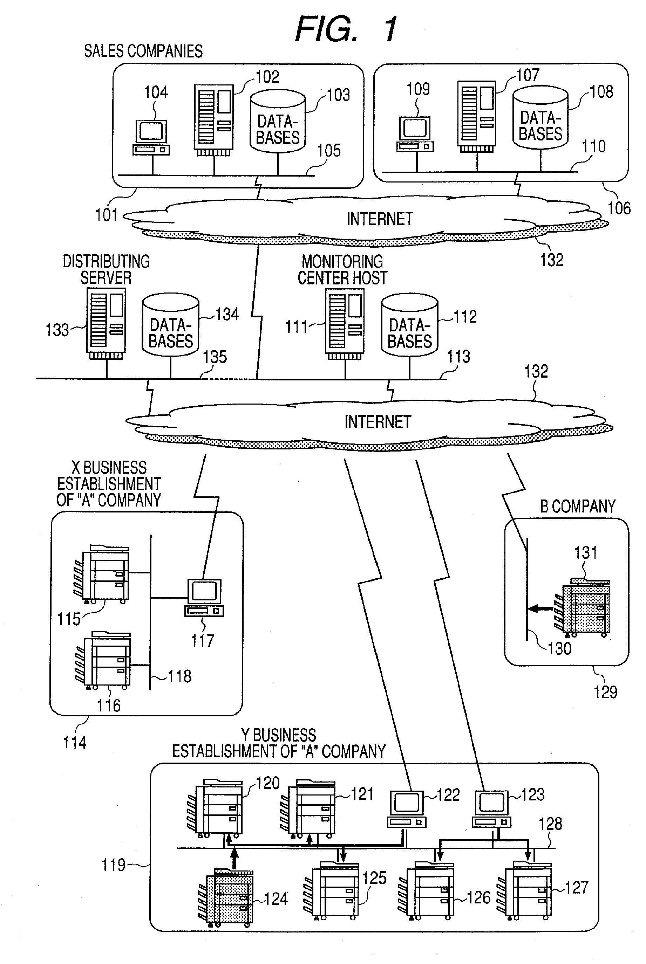

FIG. 1 is a diagram illustrating an example of a system configuration of a management system. In FIG. 1, two or more sales company systems including a system 101 and a system 106 are connected to this management system.

Databases 103 and 108 which store sales information of customers in their territories and information in connection with the management system, and PCs 104 and 109 which control data registration, correction, or the like to and in the databases 103 and 108 are included in the sales company systems 101 and 106. PCs 104 and 109 access websites which the monitoring center host 111 provides, and perform reading of data, and the like. In addition, hosts 102 and 107 have an operation unit and a display unit (display device), and can also play the role of the PCs 104 and 109. The host 102, database 103 and PC 104 are connected via a LAN 105. In addition, the host 107, database 108 and PC 109 are connected via a LAN 110. Furthermore, in FIG. 1, although it is illustrated that each system in a side of sales companies is configured by two or more apparatuses, it is not necessary to be configured by the two or more apparatuses so long as the below-mentioned respective functions can be achieved. For example, the databases 103 and 108 may exist in the hosts 102 and 107 physically, respectively. Furthermore, as long as the databases 103 and 108 can be accessed from the hosts 102 and 107, the databases 103 and 108 may exist in another location via the Internet.

Next, the monitoring center host 111 exists in the middle of the sales company side and customers. A database 112 is a database as a historical memory unit which stores information for monitoring, a counter of an image forming apparatus (image processing apparatus) acquired from a customer side, fault history information, a failure pattern table, and the like. The monitoring center host 111 and database 112 are connected via a LAN l13. In addition, the LAN 113 is connectable to the Internet. In addition, the database 112 may exist in the monitoring center host 111 physically. Furthermore, as long as access from the monitoring center host 111 is possible, it may exist in another location via the Internet. In this embodiment, the image forming apparatus is advantageously a multifunctional peripheral, i.e., a composite machine comprising a printer, a scanner and a fax, for example. The image forming apparatus is not limited to the multifunctional apparatus, but may include a mere printer, and the like.

The monitoring center host 111 has functions of acquiring, storing and processing information on the image forming apparatuses as monitoring objects and information (fault information is included), which shows operation states, from the monitoring apparatuses 117, 122, 123 and 131, and providing a warning, and the like to the external. For example, the monitoring center host 111 has a function of having the role of distributing these information to the hosts 102 and 107. The information illustrating an operation state includes toner depletion, an open door, a drum exchange, no cartridge, an unusual cooling fan, an unusual substrate, an original glass table stain, staple depletion, deficiency of light quantity of a feeding sensor, and the like. In addition, the information illustrating an operation state also includes a font memory overflow, a rendering error, an unusual fixing unit, an unusual counter, an unusual double-sided unit, a paper jam, and the like. Furthermore, counter information includes information in an accounting counter becoming an accounting object of a sales company, a department counter performing totaling by a customer's department, a sizing counter performing totaling by paper size, a parts counter indicating a consumption degree of parts in an image forming apparatus, and the like.

The accounting counter indicates the number of printing sheets of the image forming apparatus. The department counter indicates the number of printed sheets every department which a customer has set. The parts counter shall indicate, for example, rotation speed for parts, such as a drum, and shall indicate time (seconds) for parts, such as a scanner lamp. Such information becomes the operation information.

Furthermore, the hosts 102 and 107 can register information of image forming apparatus, which are made into the monitoring objects, and setting on monitoring in the monitoring center host 111 from each. The monitoring center host 111 merges the information on the image forming apparatus of the monitoring objects registered from the respective sales company hosts, and the setting on monitoring, and can perform batch management. In addition, the monitoring center host 111 can also perform setting in connection with monitoring to the monitoring apparatuses 117, 122 and 123, and the image forming apparatus 131.

Here, a service by this management system is provided on the basis of a contract of a sales company and a customer. Hence, only image forming apparatus which the sales company determined as a monitoring object on the basis of the contract is made into the monitoring object of this management system. The monitoring center host 111 provides a WEB page for reading information, stored in the database 112, or processed information to a PC connected through the Internet. By user certification, the monitoring center host 111 limits the contents of reading by sales company, customer, and user's authority and provides them on the WEB page. Furthermore, the monitoring center host 111 is enabled also to change partial data from the WEB page.

Next, the distributing server 133 exists in the middle of a sales company side and a customer side. A database 134 is a database as a historical memory unit which stores firmware and applications which are applied to the image forming apparatus, and software license information, and the like. The distributing server 133 and database 134 are connected via a LAN 135. In addition, the LAN 135 is connectable to the Internet. In addition, the database 134 may exist in the distributing server 133 physically. Furthermore, as long as the database 134 can be accessed from the distributing server 133, the database 134 may exist in another location via the Internet. In addition, the LAN 113 and LAN 135 may be the same, and the database 134 and database 112 may share data.

In FIG. 1, only each one of the monitoring center host 111, database 112, distributing server 133 and database 134 is illustrated. However, it is also good to make two or more monitoring center hosts and databases execute distributed processing in order to perform information gathering from many image forming apparatuses and monitoring systems, and load sharing of firmware distribution.

Next, a system configuration in the customer side will be described. As an environment of the customer side, there are several different environments. The customer systems 114, 119 and 129 are illustrated in FIG. 1. In the customer system 114 (X business establishment of A company), the monitoring apparatus 117 connected to a LAN 118 connected to the Internet monitors the image forming apparatuses 115 and 116. The monitoring apparatus 117 communicates with the monitoring center host 111 via the Internet. On the other hand, in the customer system (Y business establishment of A company), the monitoring apparatuses 122 and 123 manage image forming apparatuses on a LAN 128. The monitoring apparatus 122 manages the image forming apparatuses 120, 121, 124 and 125. The monitoring apparatus 123 manages the image forming apparatuses 126 and 127. The monitoring apparatuses 117, 122 and 123 are connected to a database (not illustrated). Each monitoring apparatus not only accumulates information acquired from an image forming apparatus and saves processing result of the accumulated data, but also saves setting in regard to monitoring of the image forming apparatus in a database (not illustrated). In addition, the database not illustrated is connected to the LAN 118 and may exist independently. Furthermore, as long as access from the monitoring apparatuses 117, 122 and 123 is possible, the database may exist in another location via the Internet. Whenever receiving state information (e.g., occurrence of a failure etc.) of the image forming apparatus from image forming apparatus, the monitoring apparatus transmits the state information to the monitoring center host 111.

In the customer 129 (B company), the image forming apparatus 131 itself connected to a LAN 130 connected to the Internet directly communicates with the monitoring center host 111 via the Internet. The image forming apparatus 131 transmits positively own information (e.g., counter information and occurrence of a failure, etc.) to the monitoring center host 111. A PC (not illustrated) is a PC which mounts a WEB browser, and can read a WEB page, which the above-mentioned monitoring center host 111 provides, not only from a customer environment, but also directly through the Internet by being connected to the monitoring center host 111.

In addition, it is necessary to pay attention to the following points.

(1) A HTTP/SOAP protocol can be used in communication through the Internet in the configuration described above. The SOAP is an abbreviated name for the Simple Object Access Protocol. The SOAP is a protocol for invoking data and a service of another computer from a certain computer by using the XML (eXtended Markup Language) as a base. In this example, the SOAP is mounted on HTTP. SOAP messages in which supplementary information is attached to an XML document are exchanged in communication by the SOAP. Hence, a computer which supports the SOAP includes a SOAP message generation unit which generates a SOAP message, and a SOAP message interpretation unit which interprets a SOAP message. State information of an image forming apparatus is transmitted to the monitoring center host 111 with the SOAP message in this embodiment.

(2) It is described that each image forming apparatus in A company communicates with the monitoring center host 111 through a monitoring apparatus. However, communication with the monitoring center host 111 can be performed (communicatable) not through a monitoring apparatus similarly to the image forming apparatus 131 installed in B company by a change of setting.

(Hardware configuration)

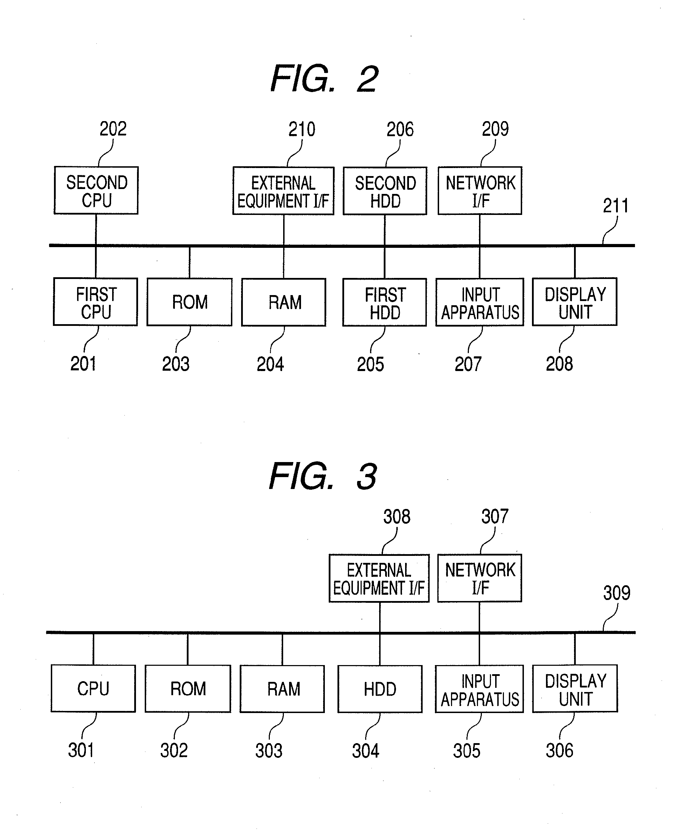

FIG. 2 is a diagram illustrating an example of a hardware configuration of the monitoring center host 111. In addition, hardware configurations of the distributing server 133 and hosts 102 and 107 are also the same. In FIG. 2, a first CPU 201 and a second CPU 202 manage each processing on this apparatus. ROM 203 stores a program and data in regard to each processing of this apparatus, but cannot rewrite the program and data. RAM 204 can store electrically temporary data in regard to the each processing of this apparatus, and can rewrite the temporary data. A first HDD 205 and a second HDD 206 store a program data, and temporary data in regard to the each processing of this apparatus, information on an image forming apparatus, which is a monitoring object and relates to this embodiment, information acquired from the image forming apparatus, and the like. For example, data of a parts counter, an accounting counter, a department counter, and the like is saved in each hard disk. An input apparatus 207 is a keyboard or a pointing device which receives an instruction input to this apparatus. A display unit (display device) 208 displays an operation situation of this apparatus, and information which the each program which operates on this apparatus outputs. A network I/F 209 is connected to a LAN and the Internet via a network and exchanges information with the external. External equipment I/F 210 connects external memory equipment, and the like. These elements are connected through a system bus 211, and data is exchanged.

FIG. 3 is a diagram illustrating an example of hardware configurations of the monitoring apparatuses 117, 122 and 123. In addition, hardware configurations of PCs 104, 109 and 134 are also the same.

A CPU 301 manages each processing on this apparatus. ROM 302 stores a program and data in regard to each processing of this apparatus, but cannot rewrite the program and data. RAM 303 can store electrically temporary data in regard to the each processing of this apparatus, and can rewrite the temporary data. In the monitoring apparatus 117, a program, data and temporary data in regard to each processing of this apparatus, information on an image forming apparatus, which is a monitoring object, information acquired from the image forming apparatus, and the like are stored in an HDD 304. In the PCs 104, 109 and 134, a WEB browser and the like are stored in the HDD 304. An input apparatus 305 is a keyboard or a pointing device which receives an instruction input to this apparatus. A display unit (display device) 306 displays an operation situation of this apparatus, and information which the each program which operates on this apparatus outputs. A network I/F 307 is connected to a LAN and the Internet via a network and exchanges information with the external. External equipment I/F 308 connects external memory equipment and the like. These elements are connected through a system bus 309 and exchange data.

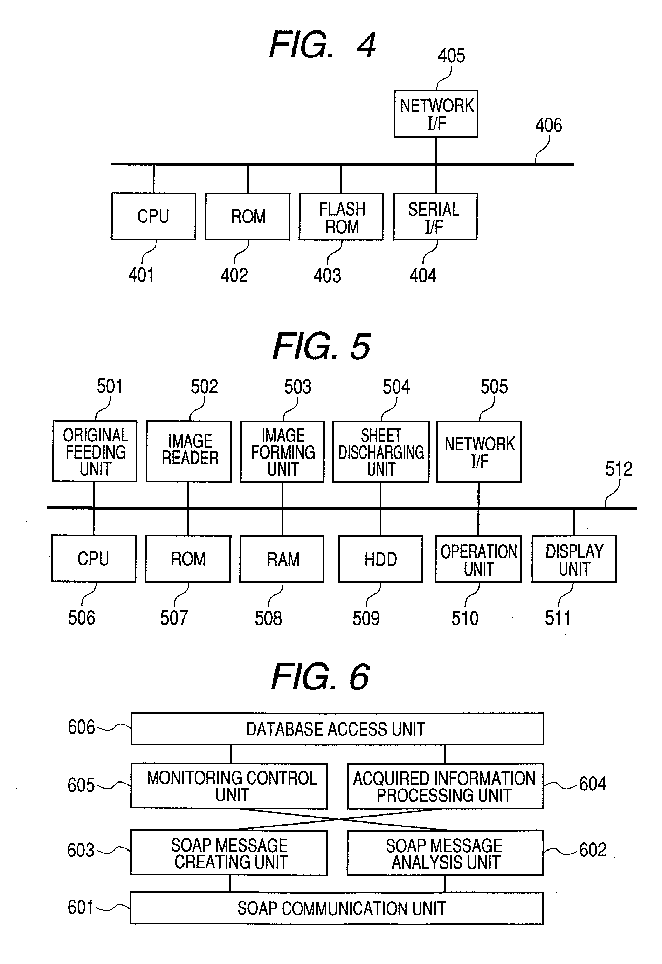

FIG. 4 is a diagram illustrating another example of hardware configurations of the monitoring apparatuses 117, 122 and 123. A CPU 401 manages each processing on this apparatus. ROM 402 stores a program and data in regard to each processing of this apparatus, but cannot rewrite the program and data. Flash ROM 403 stores data and temporary data in regard to each processing of this apparatus, information on an image forming apparatus, which is a monitoring object, information acquired from the image forming apparatus, and the like. The CPU 401 which operates on the basis of a program on this apparatus outputs an error and a log through a serial I/F 404, which can connect a terminal and the like using a serial cable. A network I/F 405 is connected to a LAN and the Internet via a network and exchanges information with the external. These are connected through a system bus 406, and exchange data.

FIG. 5 is a diagram illustrating an example of hardware configurations of image forming apparatuses 115, 116, 120, 121, 124, 125, 126, 127 and 131. More specifically, the image forming apparatuses are a multifunctional peripheral, i.e., a composite machine in which printer and facsimile functions are provided integrally, a printer (including an electrophotographic or ink jet printer), a scanner or a facsimile, which receives data from a PC and performs printing. FIG. 5 illustrates a multifunctional peripheral as an example of the image forming apparatus.

An image reader 502 reads an original in an original feeding unit 501. The image reader 502 and an image forming unit 503 convert, print and output the read original and data, received via a network, into a printing image. A sheet discharging unit 504 discharges a sheet which is printed and output, and processes sorting, stapling, and the like. A network I/F 505 is connected to a LAN and the Internet via a network and exchanges information with the external. A CPU 506 manages each processing on this apparatus. The CPU 506 monitors an operation status of an image forming apparatus on the basis of a program, and transmits state information, showing the state, to a predetermined destination when a specific event, such as a failure, arises. The destination is the monitoring center host 111, a monitoring apparatus, or the like. ROM 507 which is a nonvolatile memory unit stores a program and data in regard to each processing of this apparatus. Rewritable RAM 508 stores electrically temporary data in regard to each processing of this apparatus. An HDD 509 stores a program, data, and temporary data in regard to each processing of this apparatus, user data transmitted to this apparatus, and the like. An operation unit 510 receives an instruction input to this apparatus. A display unit (display device) 511 displays an operation situation of this apparatus, and information on an operation of the operation unit 510. These elements are connected through a system bus 512, and exchange data.

In addition, in the image forming apparatus 131 which has a function of the apparatus itself positively transmitting information for monitoring, the program and data relating to monitoring data transmission processing are held in the ROM 507 or HDD 509.

(Software)

FIG. 6 is a diagram illustrating an example of software configurations, which relate to this embodiment, in the monitoring center host 111 and distributing server 133. A SOAP communication unit 601 passes SOAP data received through the Network I/F 209 from the monitoring apparatus 117 or image forming apparatus 131 to a SOAP message analysis unit 602. In addition, the SOAP communication unit 601 transmits SOAP data, which a SOAP message creating unit 603 creates, to the monitoring apparatus 117 or image forming apparatus 131 through the Network I/F 209.

An acquired information processing unit 604 does or does not process information received from the monitoring apparatus 117 or the image forming apparatus 131 under monitoring and stores the information in the database 112 and the database 134 through a database access unit 606.

In addition, the acquired information processing unit 604 achieves a function relating to a remote monitoring system. The acquired information processing unit 604 notifies a service person in charge and a supervisor in a customer side of, for example, information received from the monitoring apparatus 117 or the image forming apparatus 131 under monitoring, and the latest information on firmware, and the like on the basis of data stored in the database 112 and database 134. In addition, the acquired information processing unit 604 notifies the service person in charge and the supervisor in the customer side of a total of counter information, error information, and the like besides the latest information on firmware.

A monitoring control unit 605 performs schedule management of going to acquire information on the monitoring apparatus 117 or the image forming apparatus 131, and control of monitoring contents and a method. Furthermore, the monitoring control unit 605 transmits an instruction to the monitoring apparatus 117 or the image forming apparatus 131 under monitoring through the SOAP message creating unit 603, SOAP communication unit 601, and Network I/F 209, if needed.

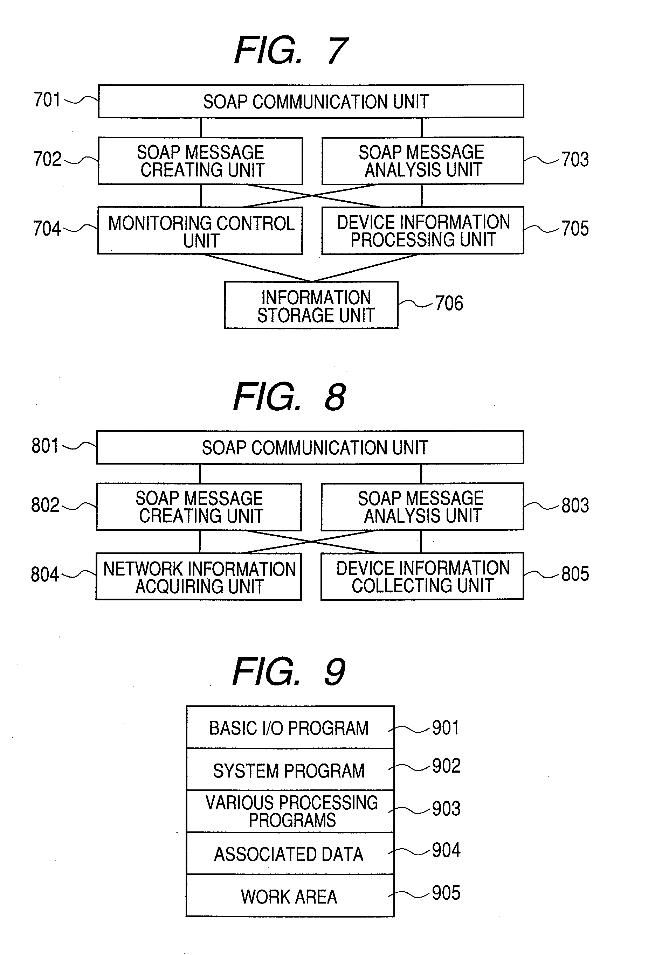

FIG. 7 is a diagram illustrating an example of software configurations, which relate to this embodiment, in the monitoring apparatuses 117, 122 and 123.

A SOAP communication unit 701 passes SOAP data received through Network I/F's 307 and 405 from the monitoring center host 111 to a SOAP message analysis unit 703. In addition, the SOAP communication unit 701 transmits SOAP data, which a SOAP message creating unit 702 creates, to the monitoring center host 111 and distributing server 133 through the Network I/F's 307 and 405.

A monitoring control unit 704 updates monitoring images formation apparatus information held in an information storage unit 706 according to a monitoring setting from the monitoring center host 111 mentioned later, acquires information on the image forming apparatuses 115 and 116, and performs schedule management.

A device information processing unit 705 stores counter information which this apparatus acquires from the image forming apparatuses 115 and 116 positively, and information on a service call, a jam, toner depletion and the like in the information storage unit 706 according to a schedule which the monitoring control unit 704 manages. Alternatively, the device information processing unit 705 performs this storage according to states of the image forming apparatuses 115 and 116.

The data stored in the information storage unit 706 is passed to the SOAP message creating unit 702 as it is through the device information processing unit 705, and is transmitted to the monitoring center host 111. Alternatively, the data stored in the information storage unit 706 is passed to the SOAP message creating unit 702 as it is after being interpreted and processed in the device information processing unit 705, and is transmitted to the monitoring center host 111.

FIG. 8 is a diagram illustrating an example of software configurations, which relate to this embodiment, in each of image forming apparatuses 115, 116, 120, 121, 124, 125, 126, 127 and 131.

A SOAP communication unit 801 passes SOAP data received through a Network I/F 505 from the monitoring center host 111 and distributing server 133 to a SOAP message analysis unit 803. In addition, the SOAP communication unit 801 transmits SOAP data, which a SOAP message creating unit 802 creates, to the monitoring center host 111 and distributing server 133 through the Network I/F 505.

A network information acquiring unit 804 can automatically acquire an IP address, a DNS server, and a gateway address in a DHCP environment.

In addition, the network information acquiring unit 804 acquires information on it when network information which is input from the operation unit 510 and is saved in the HDD 509 exists.

A device information collecting unit 805 acquires counter information held inside according to a schedule inside this composite machine, or an instruction from the monitoring center host 111, and acquires information on a service call and a jam which arise inside, toner depletion, and the like.

The data which the device information collecting unit 805 acquires is passed to the SOAP message creating unit 802 as it is, and is transmitted to the monitoring center host 111. In addition, after the data which the device information collecting unit 805 acquires may be stored, interpreted and processed in the device information collecting unit 805, the data may be passed to the SOAP message creating unit 802, and they may be transmitted to the monitoring center host 111.

FIG. 9 is a drawing illustrating an example of memory map structure in the monitoring center host 111, distributing server 133, or the monitoring apparatuses 117, 122 and 123, or the image forming apparatuses 115, 116, 120, 121, 124, 125, 126, 127 and 131. When a processing program relating to this embodiment is executed, the program is loaded on the RAM 204 in the monitoring center host 111, on the RAM 303 or Flash ROM 403 in each monitoring apparatus, or on the RAM 508 in each image forming apparatus.

A memory map is configured by an area for a basic I/O program 901, an area for a system program 902, an area for various processing programs 903 including a processing program of this example first, an area 904 which stores associated data, and a work area 905 for the programs. The basic I/O program 901 manages an I/O on this apparatus. The system program 902 provides each processing program with an operating environment. In addition, when any of the areas used as 901 to 905 by restriction of capacity become insufficient, the first HDD 205 or second HDD 206 can be also used as a part of the area of the RAM 204, the HDD 304 does the RAM 303, and the HDD 509 does the RAM 508.

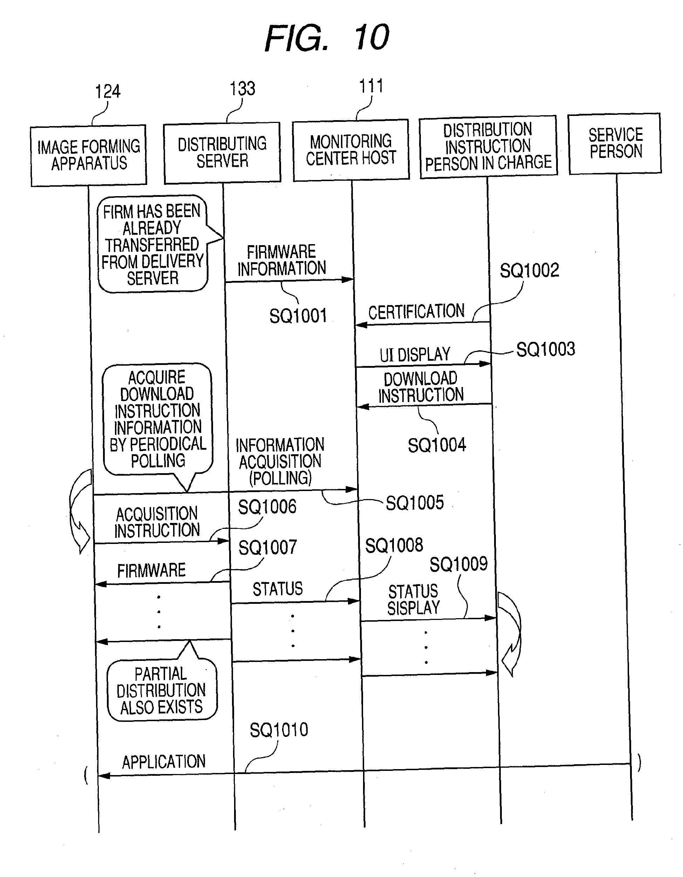

FIG. 10 is a diagram illustrating an example of general firmware distribution processing in the distributing server 133 and monitoring center host 111, and the like besides the image forming apparatus 124 in FIG. 1.

It is assumed that firmware has been transferred beforehand to the distributing server 133 from a server (transfer server) which transfers the firmware whose development was finished. Then, firm information (firmware information) is transmitted to the monitoring center host 111 from the distributing server 133 (SQ1001). Thus, the monitoring center host 111 receives firm information from the distributing server 133 (firmware information reception). This firm information is information on what version of firmware for what type image forming apparatus is uploaded to the transfer server.

On the other hand, the distribution instruction person in charge in a sales company accesses the monitoring center host 111, and is certified (display request) (SQ1002). Then, the monitoring center host 111 performs UI display (SQ1003). Here, the distribution instruction person in charge performs a download instruction so as to update the firmware to a specific version for a specific image forming apparatus (SQ1004). An image forming apparatus side performs polling to the monitoring center host 111 periodically (SQ1005), and acquires whether the download instruction occurs.

When the download instruction (firmware distribution instruction) occurs, the image forming apparatus 124 follows the instruction to issue an acquisition instruction to the distributing server 133 (SQ1006). The distributing server 133 distributes the firmware in response to the instruction (SQ1007). Thus, the image forming apparatus 124 downloads the firmware (firmware acquisition).

In addition, the distributing server 133 returns the distribution status to the monitoring center host 111 as a status (SQ1008). The monitoring center host 111 displays the status to the distribution instruction person in charge (SQ1009).

The distributing server 133 may perform partial distribution according to size of the firmware, or a series of operations of firmware distribution may be repeated several times.

Furthermore, as mentioned later, when the distribution instruction person in charge selects a manual application by a service person, after the download of the firmware finishes, a service person will go to an installation place of the image forming apparatus to apply it according to guidance (SQ1010).

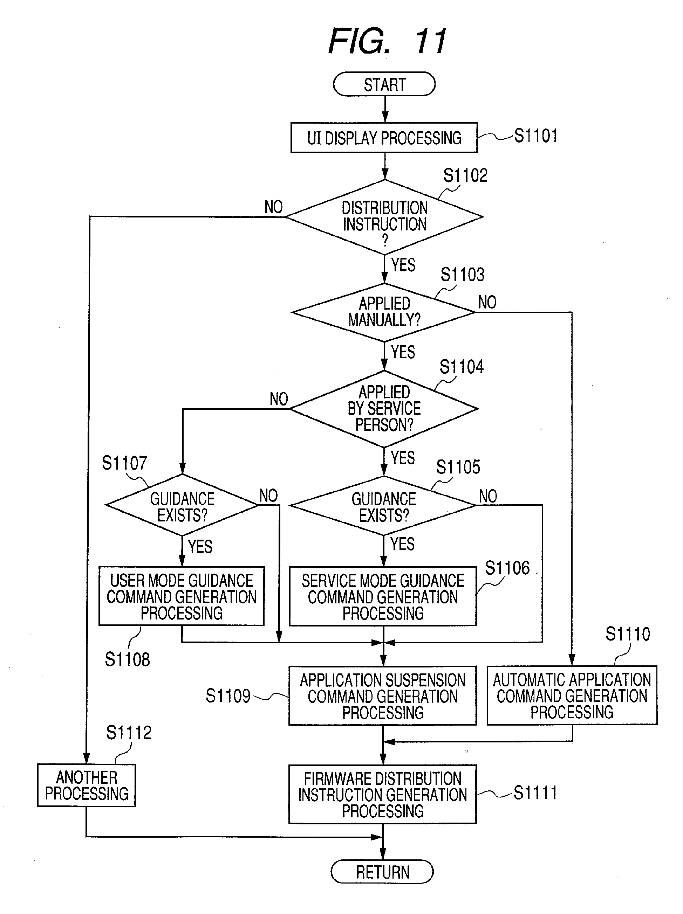

FIG. 11 is a flowchart illustrating an example of processing from the UI display (SQ1003) to the download instruction (SQ1004) in the monitoring center host 111.

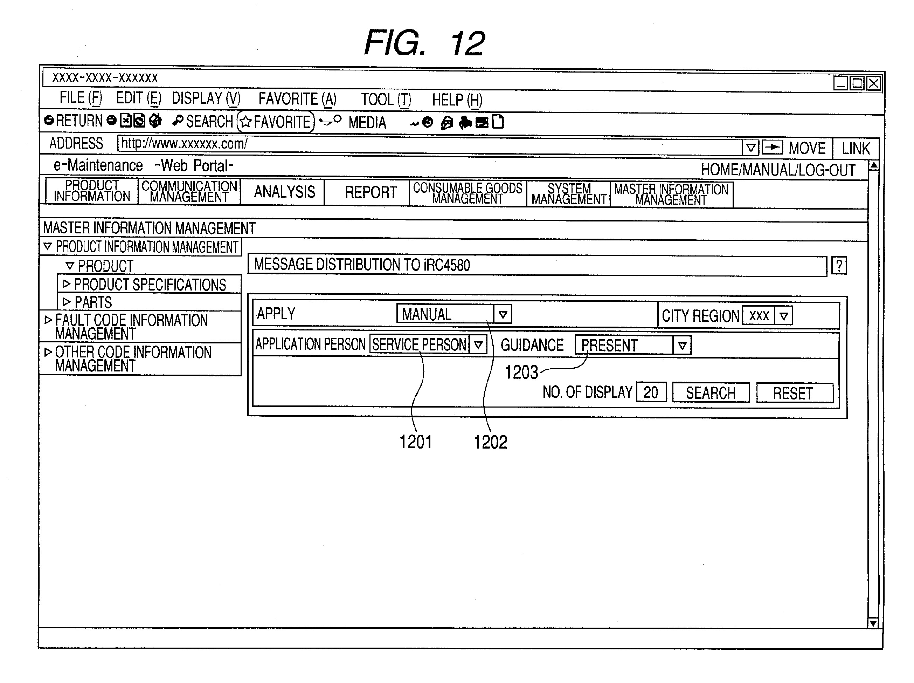

First, at S1101, the monitoring center host 111 performs UI display processing, and prompts the distribution instruction person in charge to distribute the firmware. FIG. 12 is a drawing illustrating an example of a UI (screen) displayed at S1101. The UI in FIG. 12 is a UI of urging selection about an application after the selection of distribution of a specific firmware for a specific image forming apparatus. In the UI in FIG. 12, it can be performed to select whether firmware is applied manually or automatically, and whether an application person is a service person or a user, and whether guidance is displayed or not. In addition, these initial values differ every image forming apparatus, and an initial value is determined from each attribute included in firm information. Here, it is assumed that a distribution instruction person in charge selects, for example, "application: manual", "application person: service person" and "guidance: present", and that distribution of the firmware is executed.

In addition, when "application: manual" is selected, the monitoring center host 111 performs display control so as to display options of making an application person selected, and options of making guidance selected, on the UI (screen).

At S1102, the monitoring center host 111 determines whether there was a distribution instruction, according to setting on the UI. When determining that there was the distribution instruction, processing of the monitoring center host 111 advances to S1103, and when determining that there was no distribution instruction, the processing advances to S1112. At S1112, the monitoring center host 111 executes another processing.

At S1103, the monitoring center host 111 determines whether the application is manual or not (whether the selection at 1202 in FIG. 12 (first options) is MANUAL or not), according to the setting on the UI. When the application is manual, the process of the monitoring center host 111 advances to S1104, and when the application is automatic, the processing advances to S1110. Here, it means manual uploading of firmware by an application person that an application is manual. In addition, it means automatic uploading of firmware that an application is automatic. At S1110, the monitoring center host 111 generates an automatic application command (command on an automatic upload) (command generation).

At S1104, the monitoring center host 111 determines whether an application person is a service person or not (whether the selection at 1201 (second options) in FIG. 12 is SERVICE PERSON or not), according to the setting on the UI. When the application person is a service person, the processing advances to S1105, and when the application person is a user, the processing advances to S1107.

At S1105, the monitoring center host 111 determines whether guidance exists or not (whether the selection at 1203 in FIG. 12 (third option) is PRESENT or not), according to the setting on the UI. When the guidance is PRESENT, the process of the monitoring center host 111 advances to S1106, and when the guidance is N/A, the processing advances to S1109.

At S1106, the monitoring center host 111 generates a service mode guidance command (command on guidance display in a service mode) (command generation). The service mode guidance command is a command which makes an image forming apparatus display guidance in the service mode.

On the other hand, at S1107, the monitoring center host 111 determines whether guidance exists or not (whether the selection at 1203 in FIG. 12 (third option) is PRESENT or not), according to the setting on the UI. When the guidance is PRESENT, the process of the monitoring center host 111 advances to S1108, and when the guidance is N/A, the processing advances to S1109.

At S1108, the monitoring center host 111 generates a user mode guidance command (command on guidance display in a user mode) (command generation). The user mode guidance command is a command which makes an image forming apparatus display guidance in the user mode.

At S1109, the monitoring center host 111 generates an application suspension command (command on reboot suspension) (command generation). The application suspension command is a command for making an image forming apparatus suspend an application of firmware (suspend reboot of an image forming apparatus).

At S1111, the monitoring center host 111 generates a firm distribution instruction.

The firm distribution instruction and each of the commands mentioned above are information acquired by polling from an image forming apparatus.

Thus, the monitoring center host 111 generates instruction information on upload (update) of firmware including a command, a firm distribution instruction, and the like according to a selective operation and the like through the UI (screen) (generation of instruction information). Then, the image forming apparatus acquires this instruction information from monitoring center host 111 by polling (acquisition of instruction information).

Thus, an image forming apparatus executes processing concerning upload of firmware on the basis of a firm distribution instruction and each of the commands (attribute information on upload of firmware) mentioned above. More specifically, an image forming apparatus uploads automatically firmware acquired from the distributing server 133 when an automatic application command is included in information acquired by polling. In addition, when an application suspension command is included in information acquired by polling, the image forming apparatus operates so as to suspend a reboot on upload of firmware acquired from the distributing server 133. In addition, the image forming apparatus displays the guidance on the upload of the firmware acquired from the distributing server 133 when the service mode guidance command or the user mode guidance command is included in the information acquired by polling.

That is, the image forming apparatus suspends the reboot for the application of the firmware when it becomes clear that the command on suspension of the reboot for the application of the firmware is included. Then, the image forming apparatus performs upload processing of executing the reboot for the application of the firmware when it becomes clear that a service person or the like inputs a reboot instruction for applying the firmware application to the image forming apparatus from an operator panel or the like.

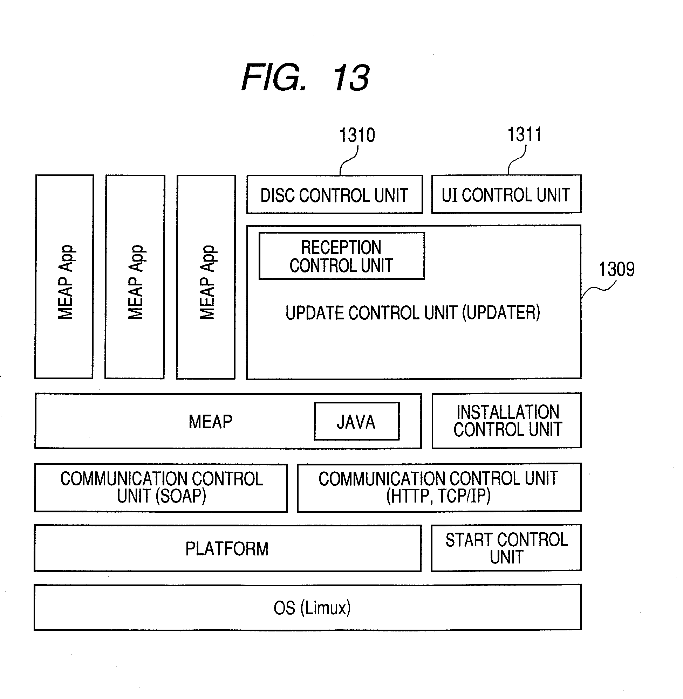

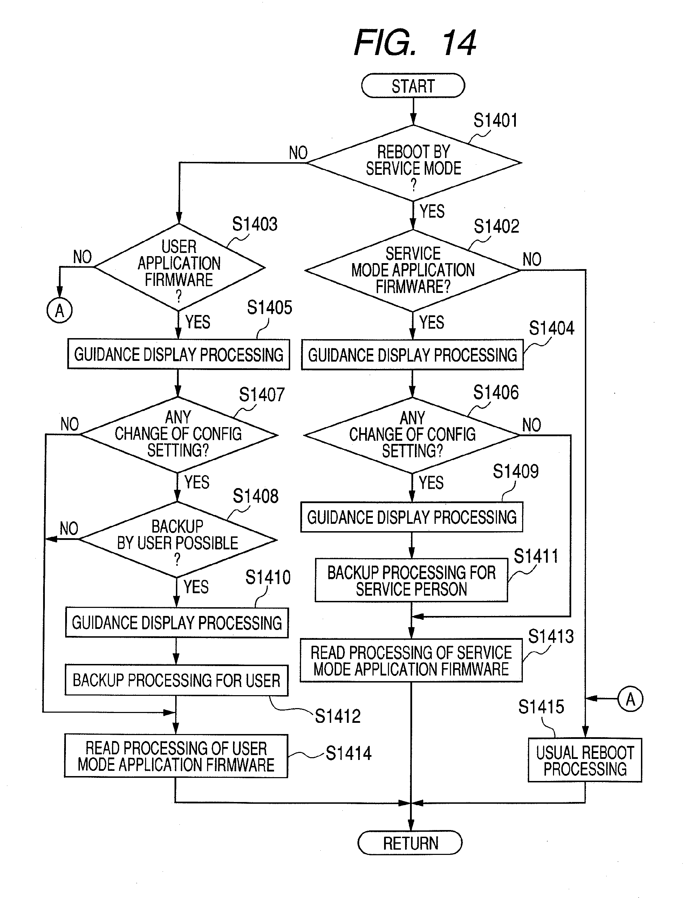

FIG. 13 is a diagram illustrating an example of a software configuration of an image forming apparatus. FIG. 14 is a flowchart (No. 1) illustrating an example of firmware application processing (update processing) in the image forming apparatus.

Here, unless otherwise specified, an update control unit 1309 in FIG. 13 performs steps of the flowchart shown below. Thus, the CPU 506 reads the update control unit 1309 into RAM 508 from HDD 509 of FIG. 5, and executes a processing on the basis of the update control unit 1309.

In addition, it is assumed that, as mentioned above, distribution of firmware is instructed in the UI of the monitoring center host 111, "application: MANUAL", "application person: SERVICE PERSON" and "guidance: PRESENT" are selected, and even acquisition of the firmware in the side of the image forming apparatus has been already executed. Thus, it is assumed that the application suspension command is included in information which an image forming apparatus acquires by polling, and the image forming apparatus suspends an application of the firmware.

At S1401, a start control unit 1303 determines whether a reboot is a reboot in a service mode, or a reboot in a user mode, according to a state (internal command) at the time of a start. For example, when a service person goes to an installation site of an image forming apparatus, performs a predetermined operation and performs a start in a service mode, the start control unit 1303 determines that it is a reboot in the service mode, according to the state (internal command) at the time of the start.

At S1402, the update control unit 1309 determines whether it is a service mode application firmware. When determining to be the service mode application firmware, the process of the update control unit 1309 advances to S1404, and when determining to be not the service mode application firmware, the process advances to S1415. More specifically, the update control unit 1309 saves the firmware downloaded from the distributing server 133 to a specific directory according to whether the service mode guidance command is included in information acquired by polling. Then, the update control unit 1309 determines whether it is the service mode application firmware, according to whether the firmware is saved in this specific directory (e.g., /BOOTDEV/SDOWN).

At S1415, although having performed suspension, the update control unit 1309 executes automatically processing of applying the firmware.

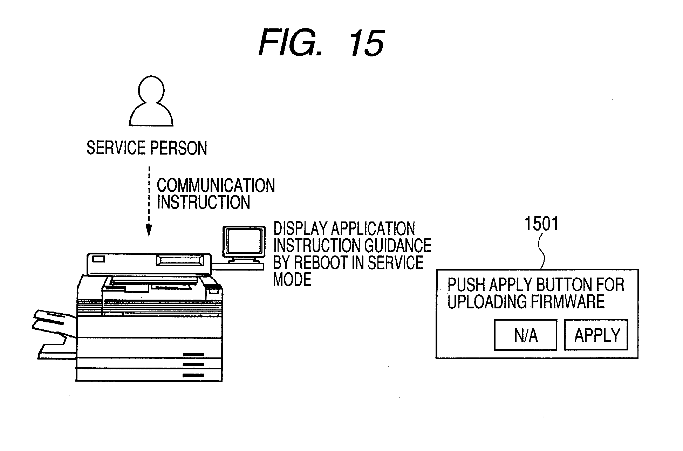

At S1404, the update control unit 1309 displays guidance (guidance screen), as illustrated by 1501 in FIG. 15, in the display unit 511 through a UI control unit 1311.

As illustrated by 1501 in FIG. 15, in the guidance screen, words, an application button, and a non-application button are included. When receiving information, showing that the application button on the guidance screen was pushed, through the UI control unit 1311, the update control unit 1309 executes the update (upload) of the subsequent firmware. FIG. 15 is a drawing (No. 1) illustrating an example of guidance.

At S1406, the update control unit 1309 determines whether there was any change of configuration setting. When determining that there was the change of configuration setting, the process of the update control unit 1309 advances to S1409, and when determining that there was not the change of configuration setting, the process advances to S1413. In addition, for example, when there was the change of configuration setting, for example, information that there was the change of configuration setting in a predetermined file and the like is recorded, and the update control unit 1309 performs determination according to whether this information is recorded in the predetermined file.

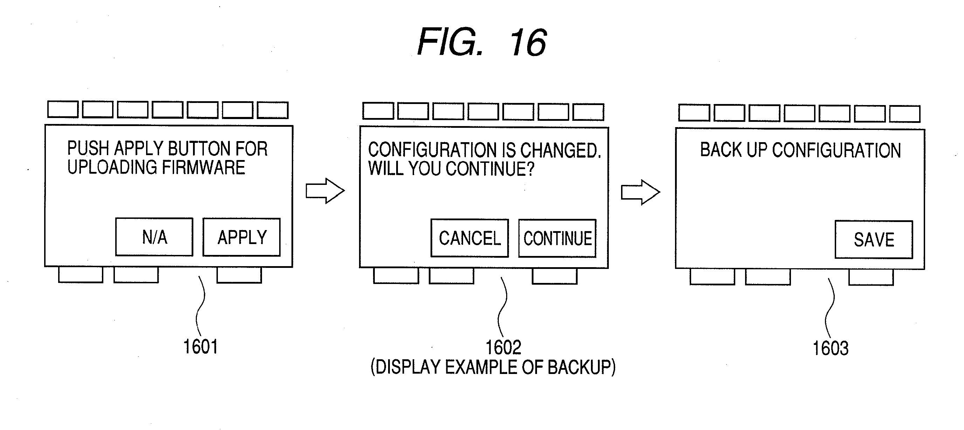

At S1409, the update control unit 1309 displays guidance (guidance screen), as illustrated by 1602 in FIG. 16, in the display unit 511, through the UI control unit 1311. As illustrated by 1602 in FIG. 16, in the guidance screen, words, a cancellation button, and a continuation button are included. When receiving information showing that the continuation button was pushed in this guidance screen through the UI control unit 1311, the update control unit 1309 makes the display unit 511 display a guidance screen, as shown by 1603 in FIG. 16, through the UI control unit 1311. As illustrated by 1603 in FIG. 16, in the guidance screen, words and a save button are included. When receiving information, showing that the save button on the guidance screen was pushed, through the UI control unit 1311, the update control unit 1309 executes backup processing of a file (configuration file) where the subsequent configuration settings are described. FIG. 16 is a drawing (No. 2) illustrating an example of guidance.

At S1411, a DISC control unit 1310 executes backup processing of copying the configuration file into a predetermined area of the HDD 509. By this processing, even in the case that the configuration file is deleted after a firmware update, restoration can be performed using this configuration file backed up.

At S1413, the update control unit 1309 reads and applies (updates) the firmware saved in the specific directory (e.g., /BOOTDEV/SDOWN) (firmware upload or upload processing).

On the other hand, at S1403, the update control unit 1309 determines whether the firmware is user mode application firmware. When determining to be the user mode application firmware, the process of the update control unit 1309 advances to S1405, and when determining to be not the user mode application firmware, the process advances to S1415. More specifically, the update control unit 1309 saves the firmware downloaded from the distributing server 133 to a specific directory according to whether the user mode guidance command is included in information acquired by polling. Then, the update control unit 1309 determines whether the firmware is the user mode application firmware, according to whether the firmware is saved in this specific directory (e.g., /BOOTDEV/UDOWN).

At S1405, the update control unit 1309 displays guidance (guidance screen), as illustrated by 1501 in FIG. 15, in the display unit 511 through the UI control unit 1311. When receiving information, showing that the application button on the guidance screen was pushed, through the UI control unit 1311, the update control unit 1309 executes the update (upload) of the subsequent firmware.

At S1407, the update control unit 1309 determines whether there was any change of configuration setting. When determining that there was the change of configuration setting, the process of the update control unit 1309 advances to S1408, and when determining that there was not the change of configuration setting, the process advances to S1414. In addition, for example, when there was the change of configuration setting, for example, information that there was the change of configuration setting in a predetermined file and the like is recorded, and the update control unit 1309 performs determination according to whether this information is recorded in the predetermined file.

At S1408, the update control unit 1309 determines whether backup by a user is possible. When determining that the backup by a user is possible, the process of the update control unit 1309 advances to S1410, and when determining the backup by a user is not possible, the process advances to S1414. In addition, the update control unit 1309 determines whether the backup by a user is possible, according to contents of the changed configuration setting.

At S1410, the update control unit 1309 displays guidance (guidance screen), as illustrated by 1602 in FIG. 16, in the display unit 511, through the UI control unit 1311. As illustrated by 1602 in FIG. 16, in the guidance screen, words, a cancellation button, and a continuation button are included. When receiving information showing that the continuation button was pushed in this guidance screen through the UI control unit 1311, the update control unit 1309 makes the display unit 511 display a guidance screen, as shown by 1603 in FIG. 16, through the UI control unit 1311. As illustrated by 1603 in FIG. 16, in the guidance screen, words and a save button are included. When receiving information, showing that the save button on the guidance screen was pushed, through the UI control unit 1311, the update control unit 1309 executes backup processing of a file (configuration file) where the subsequent configuration settings are described.

In addition, it is also good to regard the guidance display for a user different from the guidance display for a service person.

At S1412, the DISC control unit 1310 executes backup processing of copying the configuration file into a predetermined area of the HDD 509. By this processing, even in the case that the configuration file is deleted after a firmware update, restoration can be performed using this configuration file backed up.

At S1414, the update control unit 1309 reads and applies (updates) the firmware saved in the specific directory (e.g., /BOOTDEV/UDOWN) (firmware upload or upload processing).

As mentioned above, according to this embodiment, it can be selected on the UI in a firmware distribution side whether a firmware upload method is automatic or manual. In addition, in a firmware application side, firmware can be uploaded according to the update method selected in the firmware distribution side.

<Second Embodiment>

In this embodiment, supposing the case that a specific finisher is connected and an update in connection with this is necessary, an example of performing a specific instruction and a change of guidance will be described. In addition, it is assumed that the finisher is what mounts a one-chip microcomputer building in Flash ROM, which needs an update of firmware separately serially.

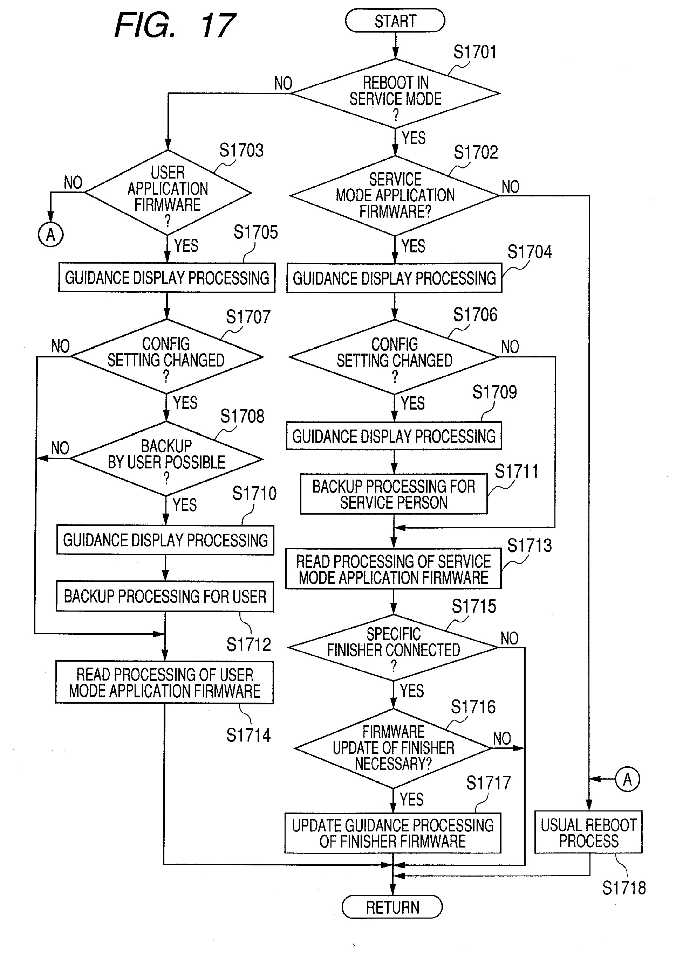

FIG. 17 is a flowchart (No. 2) illustrating an example of firmware application processing (update processing) in an image forming apparatus.

Here, unless otherwise specified, an update control unit 1309 in FIG. 13 performs steps of the flowchart shown below. Thus, the CPU 506 reads the update control unit 1309 into RAM 508 from HDD 509 of FIG. 5, and executes a processing on the basis of the update control unit 1309.

In addition, it is assumed that, as mentioned above, distribution of firmware is instructed in the UI of the monitoring center host 111, "application: MANUAL", "application person: SERVICE PERSON" and "guidance: PRESENT" are selected, and even acquisition of the firmware in the side of the image forming apparatus has been already executed. Thus, it is assumed that the application suspension command is included in information which an image forming apparatus acquires by polling, and the image forming apparatus suspends an application of the firmware.

Furthermore, since the following S1701 to S1714, and S1718 are the same as S1401 to S1415 in the first embodiment, their descriptions will be omitted.

At S1715, the update control unit 1309 determines whether a specific finisher is connected. When determining that the specific finisher is connected, the process of the update control unit 1309 advances to S1716, and when determining that the specific finisher is not connected, the update control unit 1309 ends processing illustrated in FIG. 17. Here, the update control unit 1309 determines whether the specific finisher is connected, for example, on the basis of a file where information (connected apparatus information) on an apparatus connected to an image forming apparatus is described. In addition, it is assumed that combined information of version information of firmware for the image forming apparatus, which operate adequately, and version information of firmware for the connected apparatus are further included in the above-mentioned file. In addition, it is assumed that version information of firmware for the image forming apparatus which is applied now, and version information of firmware for the connected apparatus, which is applied now, are also included with the above-mentioned combined information in the above-mentioned file.

Thus, when the firmware for the image forming apparatus is updated at S1713, S1714 or the like, the update control unit 1309 writes the version information of the updated firmware into the above-mentioned file.

At S1716, the update control unit 1309 determines whether an update of finisher firmware is necessary. When determining that the update of the finisher firmware is necessary, the process of the update control unit 1309 advances to S1717, and when determining that the update of the finisher firmware is not necessary, the update control unit 1309 ends processing illustrated in FIG. 17. Here, the update control unit 1309 determines whether the update of finisher firmware is necessary, for example, on the basis of the above-mentioned file. Thus, the update control unit 1309 determines whether the combination of the version of the above-mentioned firmware, and the version of the finisher firmware is not unsuitable by the update of the firmware for the image forming apparatus, on the basis of the above-mentioned file.

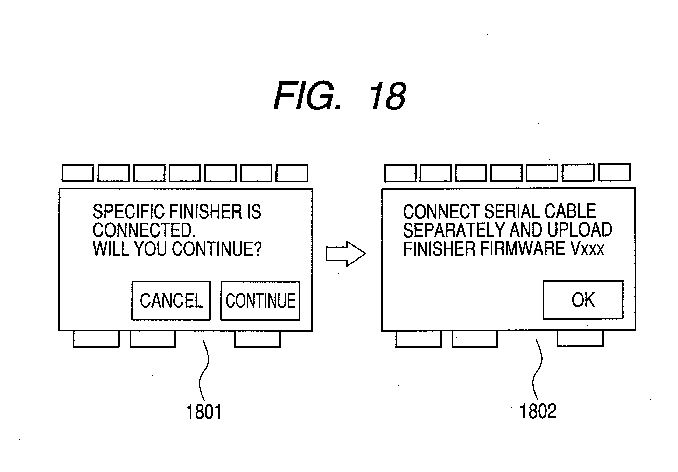

At S1717, the update control unit 1309 makes the display unit 511 display guidance (guidance screen), as illustrated by 1801 in FIG. 18, through the UI control unit 1311. As illustrated by 1801 in FIG. 18, in the guidance screen, words, a cancellation button, and a continuation button are included. When receiving information showing that the continuation button was pushed in this guidance screen through the UI control unit 1311, the update control unit 1309 makes the display unit 511 display a guidance screen, as shown by 1802 in FIG. 18, through the UI control unit 1311. As illustrated by 1802 in FIG. 18, in the guidance screen, words and an OK button are included. FIG. 18 is a drawing (No. 3) illustrating an example of guidance.

A service person pushes, for example, an OK button and executes an update (upload) of the finisher firmware manually.

According to this embodiment, when firmware of a peripheral apparatus (e.g., a finisher or the like) connected to an image forming apparatus in connection with an update of firmware for the image forming apparatus needs to be updated, guidance can be displayed and an operation can be urged.

<Other embodiments>

In addition, the object of the present invention is achieved by the following procedure. That is, a memory medium (or recording medium) which records program code of software which achieves the functions of the above-mentioned embodiments is supplied to a system or an apparatus. Then, the system or a central arithmetic processing unit (CPU or MPU) of the apparatus reads and executes the program code stored in the memory medium. In this case, since the program code itself read from the recording medium achieves the functions of the above-mentioned embodiments, the recording medium recording the program code configures the present invention.

Furthermore, an operating system (OS) and the like which are working on the system or apparatus performs a part or all of actual processing on the basis of instructions of the program code by executing the program code which the system or the above-mentioned central arithmetic processing unit of the apparatus read. This also includes the case that the functions of the above-mentioned embodiments are achieved by the processing.

Moreover, it is assumed that the program code read from the memory medium is written into an expansion card inserted into the above-mentioned system or apparatus, or memory with which a connected expansion unit is equipped. A case is also included, the case where a CPU and the like with which the expansion card or expansion unit is equipped execute some or all of actual processing on the basis of instructions of the program code, and the functions of the above-mentioned embodiments are achieved by the processing.

When applying the present invention to the above-mentioned memory medium, the program code corresponding to the flowcharts described previously is stored in the memory medium.

As described above, although the preferable embodiments of the present invention are described in detail, the present invention is not limited to the specific embodiment according to the present invention, but various deformations and modifications are possible within the scope of the invention.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
An information processing apparatus receives firmware information on firmware and an image processing apparatus which uploads the above-mentioned firmware, controls a display device to display a screen, including options of attribute information on an upload of the above-mentioned firmware, on the basis of the above-mentioned firmware information according to a display request, and generates a command according to the attribute information selected in the above-mentioned screen.

## Claims

1. An information processing apparatus, comprising:
a firmware information reception unit configured to receive firmware information on firmware and an image processing apparatus which uploads the firmware;
a display control unit configured to control a display device to display a screen, including options of attribute information on an upload of the firmware on the basis of the firmware information according to a display request; and
a command generation unit configured to generate a command according to attribute information selected in the screen.

2. The information processing apparatus according to claim 1, wherein the display control unit not only controls a display device to display a screen including first options of making manual or automatic selected on an upload of the firmware, but also controls the display device to display on the screen second options of making the upload of the firmware by a user or upload by a service person selected when manual is selected in the first option.

3. The information processing apparatus according to claim 2, wherein the display control unit controls a display device to display further third options of making presence of guidance display or no presence of guidance display selected on the guidance display on an upload of firmware in an image processing apparatus when manual is selected in the first options.

4. The information processing apparatus according to claim 2, wherein the command generation unit generates a command on an automatic upload of firmware in an image processing apparatus when automatic is selected in the first options.

5. The information processing apparatus according to claim 3, wherein the command generation unit generates a command on reboot suspension in an image processing apparatus when upload by a service person is selected in the second options and no presence of guidance display is selected in the third options.

6. The information processing apparatus according to claim 3, wherein the command generation unit generates a command on guidance display and a command on reboot suspension in an image processing apparatus when upload by a service person is selected in the second options and presence of guidance display is selected in the third options.

7. An image processing apparatus, comprising:
an instruction information acquisition unit configured to acquire instruction information on an upload of firmware from an information processing apparatus which can communicate through a network;
a firmware acquisition unit configured to acquire firmware from a distribution apparatus, which distributes firmware, according to the instruction information; and
an upload processing unit configured to suspend a reboot for an application of the firmware when it becomes clear that a command which is included in the instruction information and corresponds to attribute information on an upload of firmware includes a command on suspension of a reboot for an application of firmware, and to execute a reboot for an application of firmware when it becomes clear that there was a reboot instruction for an firmware application to the image processing apparatus.

8. The image processing apparatus according to claim 7, wherein the upload processing unit uploads automatically firmware acquired in the firmware acquisition unit when the command is a command on an automatic upload of the firmware in the image processing apparatus.

9. The image processing apparatus according to claim 7, wherein the upload processing unit suspends a reboot on an upload of firmware acquired in the firmware acquisition unit when the command is a command on reboot suspension.

10. The image processing apparatus according to claim 7, wherein the upload processing unit causes a display device to display guidance on an upload of firmware acquired in the firmware acquisition unit when the command is a command on guidance display.

11. An information processing method, comprising the steps of:
receiving firmware information on firmware and an image processing apparatus which uploads the firmware;
controlling a display device to display a screen, including options of attribute information on an upload of the firmware on the basis of the firmware information according to a display request; and
generating a command according to attribute information selected in the screen.

12. The information processing method according to claim 11, further comprising generating instruction information on an upload of the firmware which includes a command generated in the command generation step.

13. A firmware upload method, comprising the steps of:
acquiring instruction information on an upload of firmware from an information processing apparatus which can communicate through a network;
acquiring firmware from a distribution apparatus, which distributes firmware, according to the instruction information; and
suspending a reboot for an application of the firmware when it becomes clear that a command which is included in the instruction information and corresponds to attribute information on an upload of firmware includes a command on suspension of a reboot for an application of firmware, and executing a reboot for an application of firmware when it becomes clear that there was a reboot instruction for an firmware application to the image processing apparatus.

14. A computer-readable memory medium which stores a control program for causing a computer to execute an information processing method, the method comprising the steps of:
receiving firmware information on firmware and an image processing apparatus which uploads the firmware;
controlling a display device to display a screen, including options of attribute information on an upload of the firmware on the basis of the firmware information according to a display request; and
generating a command according to attribute information selected in the screen.

15. A computer-readable memory medium which stores a control program for causing a computer to execute a firmware upload method, the method comprising the steps of:
acquiring instruction information on an upload of firmware from an information processing apparatus which can communicate through a network;
acquiring firmware from a distribution apparatus, which distributes firmware, according to the instruction information; and
suspending a reboot for an application of the firmware when it becomes clear that a command which is included in the instruction information and corresponds to attribute information on an upload of firmware includes a command on suspension of a reboot for an application of the firmware, and executing a reboot for an application of firmware when it becomes clear that there was a reboot instruction for an firmware application to the image processing apparatus.
